# EUROPEAN PATENT APPLICATION

(11) **EP 4 723 459 A1**
(43) Date of publication of application: **08.04.2026**
(21) Application number: 24204913.8
(22) Date of filing: 07.10.2024
(51) Int. Cl.: H02M 1/42, H02M 1/12

(54) **PFC STAGE FOR LED SUPPLY WITH IMPROVED THD**

(71) Applicant: Tridonic GmbH & Co. KG, 6851 Dornbirn (AT)
(72) Inventor: Schneider, Miguel Philipp, 6851 Dornbirn (AT); Romano, Fabio, 6851 Dornbirn (AT); Lochmann, Frank, 6851 Dornbirn (AT)
(74) Representative: Rupp, Christian

(57) **Abstract**

It is provided an actively switched power factor correction, PFC, stage (10) for an LED driver (20), comprising a control switch (11) having a control input (12), a control unit (13) configured to issue a switch-on time for the control switch (11) at a control port (14), and an external and/or auxiliary circuitry (15) connected to the control input (12) of the control switch (11) and to the control port (14) of the control unit (13). The external and/or auxiliary circuitry (15) is configured to sense the switch-on time issued by the control unit (13), to sense a rectified supply voltage (16) of the actively switched PFC stage (10), and to change and/or manipulate and/or shorten the switch-on time depending on the rectified supply voltage (16).

## Description

The invention relates to a power factor correction, PFC, stage for LED supply with improved total harmonic distortion, THD. In particular, the invention relates to an actively switched PFC stage for an LED driver, an external and/or auxiliary circuitry for an actively switched PFC stage and/or an LED driver, an LED driver comprising such an actively switched PFC stage, a luminaire comprising such an LED driver, and a method for operating an actively switched PFC stage.

Generally, in times of an increasing use of LED-based lighting, power factor correction may be applied to such lighting to achieve a lower load for the corresponding power grid or power plant, respectively. To ensure the most efficient energy transport possible, the power factor should be as small as possible. Furthermore, it is noted that the more sinusoidal the corresponding current, the smaller the power factor is. Therefore, in the context of said power factor correction it is essential to control the respective power electronics in such a way that the current drawn from the mains is as sinusoidal as possible. The total harmonic distortion, THD, parameter describes how well sinusoidal said current is. Disadvantageously, conventional power factor correction circuitry cannot achieve a significantly enhanced power factor or THD, respectively.

Accordingly, there is the object to provide an actively switched PFC stage for an LED driver, an external and/or auxiliary circuitry for an actively switched PFC stage and/or an LED driver, an LED driver comprising such an actively switched PFC stage, a luminaire comprising such an LED driver, and a method for operating an actively switched PFC stage, wherein a corresponding power factor, PF, or total harmonic distortion, THD, respectively, can be enhanced in a particularly efficient manner.

This object is solved by the features of the first independent claim for an actively switched PFC stage for an LED driver, the features of the second independent claim for an external and/or auxiliary circuitry for an actively switched PFC stage and/or an LED driver, the features of the third independent claim for an LED driver comprising such an actively switched PFC stage, the features of the fourth independent claim for a luminaire comprising such an LED driver, and the features of the fifth independent claim for a method for operating an actively switched PFC stage. The dependent claims contain further developments. Accordingly, the invention is described in the appended set of claims.

According to a first aspect of the invention, an actively switched power factor correction, PFC, stage for an LED driver is provided. Said actively switched PFC stage comprises a control switch having a control input, a control unit configured to issue a switch-on time for the control switch at a control port, and an external and/or auxiliary circuitry connected to the control input of the control switch and to the control port of the control unit. The external and/or auxiliary circuitry is configured to sense the switch-on time issued by the control unit, to sense a rectified supply voltage of the actively switched PFC stage, and to change and/or manipulate and/or shorten the switch-on time depending on the rectified supply voltage.

Advantageously, power factor or total harmonic distortion, respectively, can be enhanced in a particularly efficient manner.

According to an implementation form of the first aspect of the invention, the switch-on time is changed and/or manipulated and/or shortened during more than 50 per cent of the time duration of a corresponding half cycle of the rectified supply voltage.

Advantageously, for instance, flexibility can be increased, thereby also increasing efficiency.

According to a further implementation form of the first aspect of the invention, the external and/or auxiliary circuitry is configured to reduce the switch-on time in periods outside corresponding zero crossings of the rectified supply voltage of the actively switched PFC stage.

Advantageously, for example, efficiency can further be increased.

According to a further implementation form of the first aspect of the invention, the switch-on time is changed and/or manipulated and/or shortened on a cycle-to-cycle basis.

Advantageously, for instance, complexity can be reduced, thereby increasing efficiency.

According to a further implementation form of the first aspect of the invention, the switch-on time issued by the control unit is sensed, furthermore the rectified supply voltage of the actively switched PFC stage is sensed, and in a correspondingly following cycle, the switch-on time is changed and/or manipulated and/or shortened depending on the rectified supply voltage.

Advantageously, for example, the switch-on time can be changed and/or manipulated and/or shortened rather slow, thereby allowing for a reduced complexity.

According to a further implementation form of the first aspect of the invention, the external and/or auxiliary circuitry comprises or is a transistor circuitry.

Advantageously, for instance, the external and/or auxiliary circuitry can comprise a bipolar transistor.

According to a further implementation form of the first aspect of the invention, the rectified supply voltage of the actively switched PFC stage is sensed with the aid of a voltage divider.

Advantageously, for example, complexity can be reduced, which leads to an increased efficiency.

According to a further implementation form of the first aspect of the invention, the control switch comprises or is a field-effect transistor. In addition to this or as an alternative, the control input comprises or is a gate terminal.

Advantageously, for instance, complexity can be reduced, thereby increasing efficiency.

According to a further implementation form of the first aspect of the invention, especially for changing and/or manipulating and/or shortening the switch-on time, the external and/or auxiliary circuitry is configured to short-circuit the control input of the control switch, preferably to ground potential.

Advantageously, for example, the switch-on time can be reduced by a desired value in a particular efficient and reliable manner.

According to a second aspect of the invention, it is provided an external and/or auxiliary circuitry for an actively switched power factor correction, PFC, stage and/or an LED driver, as the external and/or auxiliary circuitry of the actively switched PFC stage according to the first aspect of the invention or any of its implementation forms, respectively.

Advantageously, power factor or total harmonic distortion, respectively, can be enhanced in a particularly efficient manner.

According to a third aspect of the invention, it is provided an LED driver comprising an actively switched PFC stage according to the first aspect of the invention or any of its implementation forms, respectively.

Advantageously, power factor or total harmonic distortion, respectively, can be enhanced in a particularly efficient manner.

According to a fourth aspect of the invention, it is provided a luminaire comprising an LED driver according to the third aspect of the invention, and an LED-based load supplied by said LED driver.

Advantageously, power factor or total harmonic distortion, respectively, can be enhanced in a particularly efficient manner.

According to a fifth aspect of the invention, a method for operating an actively switched power factor correction, PFC, stage with a control switch and a control unit configured to issue a switch-on time for the control switch is provided. Said method comprises the steps of sensing the switch-on time issued by the control unit, sensing a rectified supply voltage of the actively switched PFC stage, and changing and/or manipulating and/or shortening the switch-on time depending on the rectified supply voltage.

Advantageously, power factor or total harmonic distortion, respectively, can be enhanced in a particularly efficient manner.

According to an implementation form of the fifth aspect of the invention, the switch-on time is changed and/or manipulated and/or shortened during more than 50 per cent of the time duration of a corresponding half cycle of the rectified supply voltage.

Advantageously, for instance, flexibility can be increased, thereby also increasing efficiency.

According to a further implementation form of the fifth aspect of the invention, the method comprises the step of reducing the switch-on time in periods outside corresponding zero crossings of the rectified supply voltage of the actively switched PFC stage.

Advantageously, for example, efficiency can further be increased.

Exemplary embodiments of the invention are now further explained with respect to the drawings by way of example only, and not for limitation. In the drawings:
- Fig. 1: shows an exemplary embodiment of an actively switched PFC stage in combination with an exemplary embodiment of an LED driver or a luminaire, respectively;
- Fig. 2: shows a further exemplary embodiment of an actively switched PFC stage in combination with a further exemplary embodiment of an LED driver or a luminaire, respectively;
- Fig. 3: shows an exemplary signal issued by the PFC control unit of the actively switched PFC stage according to Fig. 2 at the control port of said PFC control unit over time;
- Fig. 4: shows an exemplary rectified supply voltage of the actively switched PFC stage according to Fig. 2 over time; and
- Fig. 5: shows a flow chart of an exemplary embodiment of a method for operating an actively switched PFC stage.

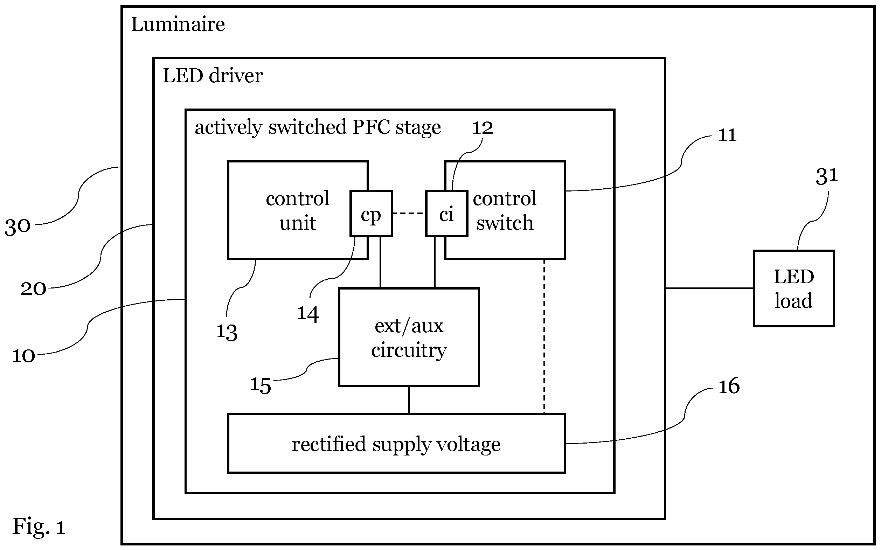

With respect to Fig. 1, a block diagram of an exemplary embodiment of an actively switched power factor correction, PFC, stage 10 for an LED driver is depicted.

For the sake of completeness, it is noted that said Fig. 1 also depicts an exemplary embodiment of an LED driver 20 comprising said actively switched PFC stage 10. In addition to this, Fig. 1 also illustrates an exemplary embodiment of a luminaire 30 comprising said LED driver 20 and an LED-based load 31 supplied by said LED driver 20.

In accordance with Fig. 1, the actively switched PFC stage 10 comprises a control switch 11 having a control input 12, a control unit 13 configured to issue a switch-on time for the control switch 11 at a control port 14, and an external and/or auxiliary circuitry 15 connected to the control input 12 of the control switch 11 and to the control port 14 of the control unit 13.

In this context, the external and/or auxiliary circuitry 15 is configured to sense the switch-on time issued by the control unit 13, to sense a rectified supply voltage 16 of the actively switched PFC stage 10, and to change and/or manipulate and/or shorten the switch-on time depending on the rectified supply voltage 16.

Accordingly, it is noted that the actively switched PFC stage 10 and/or the LED driver 20 can comprise a rectifier especially configured to rectify the corresponding supply voltage or mains voltage, respectively, for supplying the LED-based load 31.

As it can further be seen from Fig. 1, the control port 14 of the control unit 13 may be connected to the control input 12 of the control switch 11.

With respect to the control switch 11, it is noted that it might be particularly advantageous if the control switch 11 is configured to control corresponding current flow and/or to shape a corresponding input current, especially of the LED driver 20 and/or of the actively switched PFC stage 10, so that said input current is in phase with the corresponding supply voltage or mains voltage, respectively.

It is noted that it might be particularly advantageous if the switch-on time is changed and/or manipulated and/or shortened during more than 50 per cent of the time duration of a corresponding half cycle of the rectified supply voltage 16.

It is further noted that it might be particularly advantageous if the external and/or auxiliary circuitry 15 is configured to reduce the switch-on time in periods outside corresponding zero crossings of the rectified supply voltage 16 of the actively switched PFC stage 10.

Furthermore, it might be particularly advantageous if the switch-on time is changed and/or manipulated and/or shortened on a cycle-to-cycle basis.

Especially in this context, it might be particularly advantageous if the switch-on time issued by the control unit 13 is sensed, furthermore the rectified supply voltage 16 of the actively switched PFC stage 10 is sensed, and in a correspondingly following cycle, the switch-on time is changed and/or manipulated and/or shortened depending on the rectified supply voltage 16.

With respect to the external and/or auxiliary circuitry 15, it is noted that it might be particularly advantageous if the external and/or auxiliary circuitry 15 comprises or is a transistor circuitry. Furthermore, the LED driver 20 or the luminaire 30, respectively, can comprise the external and/or auxiliary circuitry 15, especially instead of the actively switched PFC stage 10.

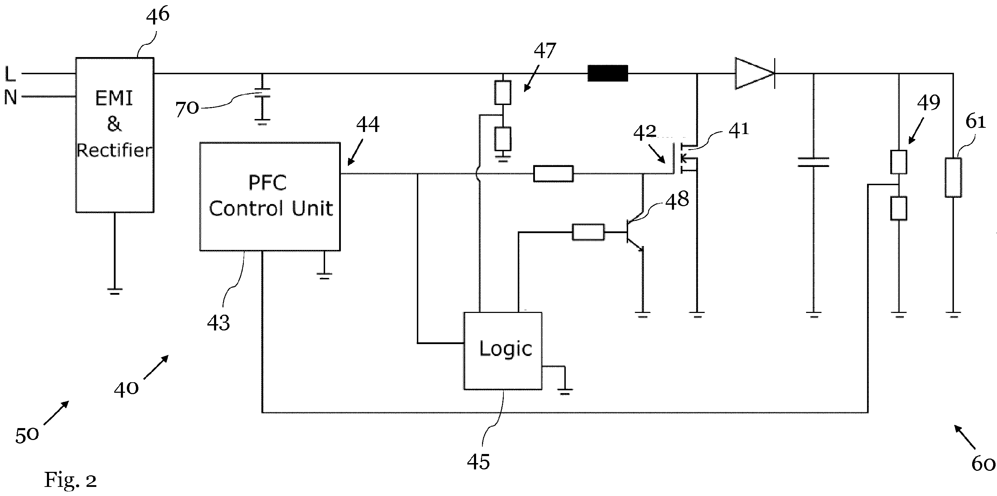

It is further noted that it might be particularly advantageous if the rectified supply voltage 16 of the actively switched PFC stage 10 is sensed with the aid of a voltage divider, which will be shown by Fig. 2.

Moreover, it might be particularly advantageous if the control switch 11 comprises or is a field-effect transistor. Additionally or alternatively, the control input 12 can comprise or be a gate terminal. This will be shown by Fig. 2.

It is noted that it might be particularly advantageous if, especially for changing and/or manipulating and/or shortening the switch-on time, the external and/or auxiliary circuitry 15 is configured to short-circuit the control input 12 of the control switch 11, preferably to ground potential.

Now, with respect to Fig. 2, an exemplary embodiment of an actively switched PFC stage 40 for an LED driver is illustrated.

For the sake of completeness, it is noted that said Fig. 2 also illustrates an exemplary embodiment of an LED driver 50 comprising said actively switched PFC stage 40. In addition to this, Fig. 2 also depicts an exemplary embodiment of a luminaire 60 comprising said LED driver 50 and an LED-based load 61 supplied by said LED driver 50.

In accordance with Fig. 2, the actively switched PFC stage 40 comprises a control switch, exemplarily a field-effect transistor 41, having a control input, exemplarily a gate terminal 42, a control unit, exemplarily a PFC control unit 43, configured to issue a switch-on time for the control switch or the field-effect transistor 41, respectively at a control port 44, and an external and/or auxiliary circuitry, exemplarily a logic circuitry 45, connected to the control input or the gate terminal 42, respectively, of the control switch or of the field-effect transistor 41, respectively, and to the control port 44 of the control unit or of the PFC control unit 43, respectively.

With respect to the actively switched PFC stage 40 and/or the LED driver 50 and/or the luminaire 60, it is noted that the explanations above regarding the actively switched PFC stage 10 and/or the LED driver 20 and/or the luminaire 30 can analogously apply, and vice versa. In this context, if applicable, analogous parts or elements, respectively, may be equipped with reference signs differing by a difference of 30. Accordingly, for instance, the explanations regarding the control switch 11 of Fig. 1 can analogously apply to the field-effect transistor 41 of Fig. 2, and vice versa.

As it can further be seen from Fig. 2, and as already indicated above in the context of Fig. 1, the actively switched PFC stage 40 or the LED driver 50 or the luminaire 60 exemplarily comprises a rectifier 46 configured to rectify a supply voltage or a mains voltage, respectively. In addition to this, the actively switched PFC stage 40 or the LED driver 50 or the luminaire 60 can exemplarily comprise an electromagnetic interference, EMI, filter.

Moreover, the actively switched PFC stage 40 or the LED driver 50 or the luminaire 60 exemplarily comprises a radio frequency, RF, smoothing capacitor 70.

It is noted that it might be particularly advantageous if said EMI filter is connected upstream of the rectifier 46 and/or said RF smoothing capacitor 70 is connected downstream of the rectifier 46.

Furthermore, as indicated above in the context of Fig. 1, the rectified supply voltage of the actively switched PFC stage 40 is sensed with the aid of a voltage divider 47. Said voltage divider 47 exemplarily comprises a series connection of two resistors. Said series connection of the two resistors is exemplarily connected in parallel to the rectified supply voltage and/or to the RF smoothing capacitor 70.

As it can further be seen from Fig. 2, the PFC control unit 43 is exemplarily configured to sense a corresponding output voltage of the actively switched PFC stage 40 and/or of the LED driver 50.

Said output voltage is exemplarily sensed with the aid of a voltage divider 49. Said voltage divider 49 exemplarily comprises a series connection of two resistors. Said series connection of the two resistors is exemplarily connected in parallel to the output voltage and/or to the LED-based load 61.

Moreover, as already indicated above in the context of Fig. 1, the logic circuitry 45 exemplarily comprises or uses a bipolar transistor 48 for short-circuiting or connecting the gate terminal 42 of the field-effect transistor 41 to ground potential.

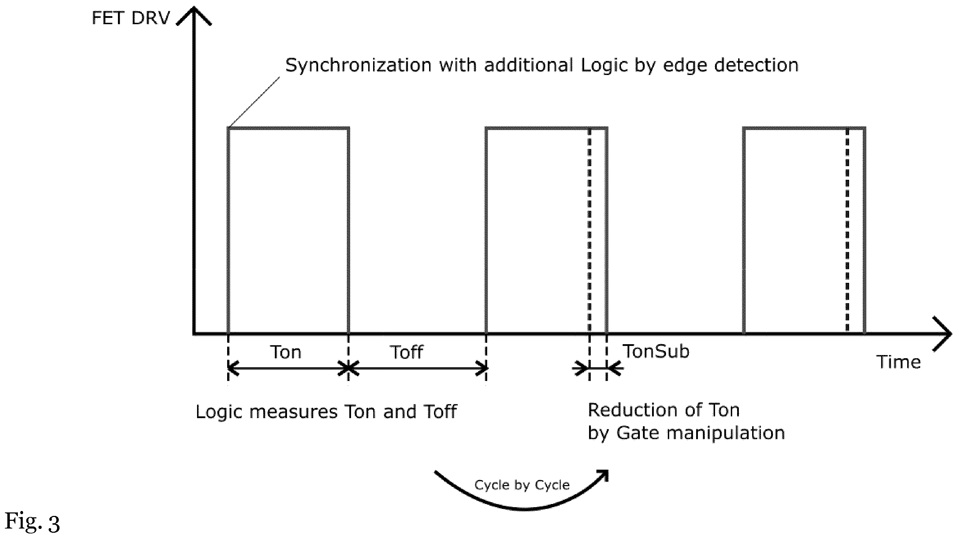

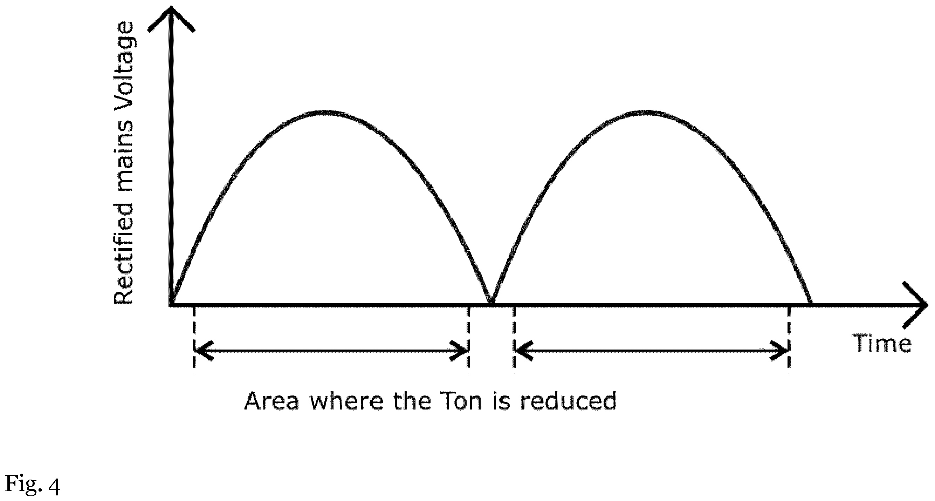

In the light of Fig. 3 showing an exemplary signal issued by the PFC control unit 43 of the actively switched PFC stage 40 according to Fig. 2 at the control port 44 of said control unit 43 over time and Fig. 4 showing an exemplary rectified supply voltage of the actively switched PFC stage 40 according to Fig. 2 over time, the corresponding functioning of the actively switched PFC stage 40 is explained in the following.

The THD of actively switched PFC stage 40 or of the LED driver 50, respectively, can be improved if over a certain period of the mains cycle or supply voltage cycle, respectively, especially except for a defined range in the mains zero crossing, a certain value ("TonSub" in Fig. 3), preferably being constant or variable, is subtracted from the switch-on time ("Ton" in Fig. 3) calculated by the PFC control unit 43. As a result, the PFC control unit 43, preferably comprising or being an integrated circuit and/or an ASIC, automatically compensates for this deliberately induced "switch-on time error" by significantly increasing the switch-on time in the mains zero crossing, i.e. at the point at which no predefined value is deducted. The significantly longer switch-on time caused by this in the mains zero crossing advantageously ensures that the RF smoothing capacitor 70 can discharge much more deeply and thus has a positive effect on the THD performance.

Accordingly, in order to improve the THD, the switch-on time or the control signal issued at the control port 44, respectively, exemplarily comprising or being a boost FET gate signal and/or a flyback FET gate signal, is manipulated via additional logic or the logic circuitry 45, respectively. The function of such a manipulation circuit or the logic circuitry 45, respectively, especially is to bring the gate 42 of the corresponding FET 41 to ground potential cyclically and at the right moment through a transistor circuit, preferably based on a bipolar transistor and/or a FET, exemplarily based on the bipolar transistor 48. In this way, the switch-on time calculated by the PFC control unit 43 can be shortened as required, i.e. a certain value can be subtracted as described above.

Furthermore, the additional logic or the logic circuitry 45, respectively, measures the control signal generated by the PFC control unit 43 or the switch-on time issued at the control port 44, respectively. This can serve as synchronization and to determine the switch-on time generated by the PFC control unit 43. This switch-on time can now be reduced and/or shortened by means of the additional logic or the logic circuitry 45, respectively, and the manipulation circuit, exemplarily based on the bipolar transistor 48, at the gate 42 of the corresponding FET 41 by pulling it to ground. As the PFC control unit 43 of the actively switched PFC stage 40 is very slow, the synchronization and shortening of the switch-on time can be carried out "cycle by cycle". In order to realize the manipulation only during a certain phase of the mains cycle, the additional logic or the logic circuitry 45, respectively, measures the rectified input voltage via the voltage divider 47.

Advantageously, in this manner, the PFC control unit 43 is efficiently encouraged or forced to a different and better behavior which improves the THD and thus the power factor. Further advantageously, the PFC control unit 43 itself can be left unchanged.

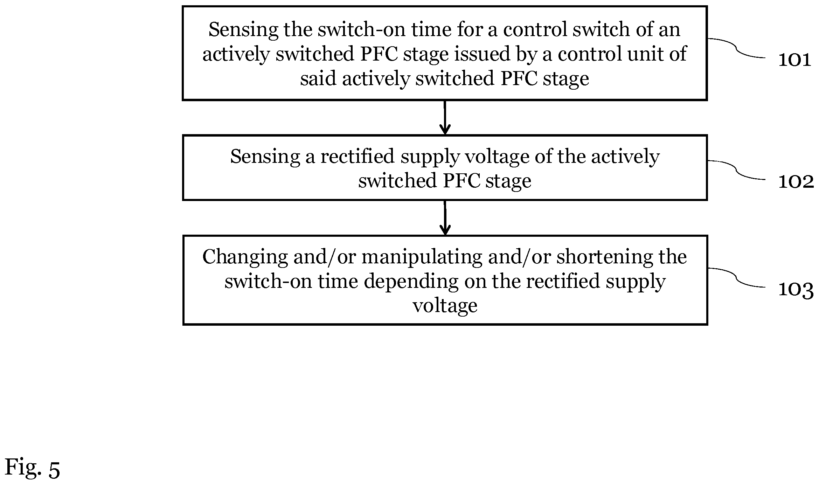

Finally, Fig. 5 illustrates an exemplary embodiment of a method for operating an actively switched PFC stage with a control switch and a control unit configured to issue a switch-on time for the control switch, such as the actively switched PFC stage 10 according to Fig. 1 or the actively switched PFC stage 40 according to Fig. 2, respectively.

As it can be seen from said Fig. 5, a step 101 comprises sensing the switch-on time issued by the control unit. A further step 102 comprises sensing a rectified supply voltage of the actively switched PFC stage. Another step 103 comprises changing and/or manipulating and/or shortening the switch-on time depending on the rectified supply voltage.

It is noted that it might be particularly advantageous if the switch-on time is changed and/or manipulated and/or shortened during more than 50 per cent of the time duration of a corresponding half cycle of the rectified supply voltage.

It is further noted that it might be particularly advantageous if the method comprises the step of reducing the switch-on time in periods outside corresponding zero crossings of the rectified supply voltage of the actively switched PFC stage.

Furthermore, it might be particularly advantageous if the switch-on time is changed and/or manipulated and/or shortened on a cycle-to-cycle basis.

Especially in this context, it might be particularly advantageous if the switch-on time issued by the control unit is sensed, furthermore the rectified supply voltage of the actively switched PFC stage is sensed, and in a correspondingly following cycle, the switch-on time is changed and/or manipulated and/or shortened depending on the rectified supply voltage.

Moreover, it might be particularly advantageous if the switch-on time is changed and/or manipulated and/or shortened with the aid of a transistor circuitry.

It is further noted that it might be particularly advantageous if the rectified supply voltage of the actively switched PFC stage is sensed with the aid of a voltage divider.

With respect to the control switch, it is noted that it might be particularly advantageous if the control switch comprises or is a field-effect transistor. In addition to this or as an alternative, the control switch can comprise a control input, wherein the control input may especially comprise or be a gate terminal.

Furthermore, especially for and/or in the context of changing and/or manipulating and/or shortening the switch-on time, it might be particularly advantageous if the method comprises the step of short-circuiting the control input of the control switch, preferably to ground potential.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An actively switched power factor correction, PFC, stage (10, 40) for an LED driver (20, 50), comprising:
a control switch (11, 41) having a control input (12, 42),
a control unit (13, 43) configured to issue a switch-on time for the control switch (11, 41) at a control port (14, 44), and
an external and/or auxiliary circuitry (15, 45) connected to the control input (12, 42) of the control switch (11, 41) and to the control port (14, 44) of the control unit (13, 43),
wherein the external and/or auxiliary circuitry (15, 45) is configured to sense the switch-on time issued by the control unit (13, 43), to sense a rectified supply voltage (16) of the actively switched PFC stage (10, 40), and to change and/or manipulate and/or shorten the switch-on time depending on the rectified supply voltage (16).

2. The actively switched PFC stage (10, 40) according to claim 1,
wherein the switch-on time is changed and/or manipulated and/or shortened during more than 50 per cent of the time duration of a corresponding half cycle of the rectified supply voltage (16).

3. The actively switched PFC stage (10, 40) according to claim 1 or 2,
wherein the external and/or auxiliary circuitry (15, 45) is configured to reduce the switch-on time in periods outside corresponding zero crossings of the rectified supply voltage (16) of the actively switched PFC stage (10, 40).

4. The actively switched PFC stage (10, 40) according to any of the claims 1 to 3,
wherein the switch-on time is changed and/or manipulated and/or shortened on a cycle-to-cycle basis.

5. The actively switched PFC stage (10, 40) according to claim 4,
wherein the switch-on time issued by the control unit (13, 43) is sensed, furthermore the rectified supply voltage (16) of the actively switched PFC stage (10, 40) is sensed, and in a correspondingly following cycle, the switch-on time is changed and/or manipulated and/or shortened depending on the rectified supply voltage (16).

6. The actively switched PFC stage (10, 40) according to any of the claims 1 to 5,
wherein the external and/or auxiliary circuitry (15, 45) comprises or is a transistor circuitry.

7. The actively switched PFC stage (10, 40) according to any of the claims 1 to 6,
wherein the rectified supply voltage (16) of the actively switched PFC stage (10, 40) is sensed with the aid of a voltage divider (47).

8. The actively switched PFC stage (10, 40) according to any of the claims 1 to 7,
wherein the control switch (11, 41) comprises or is a field-effect transistor, and/or
wherein the control input (12, 42) comprises or is a gate terminal.

9. The actively switched PFC stage (10, 40) according to any of the claims 1 to 8,
wherein, especially for changing and/or manipulating and/or shortening the switch-on time, the external and/or auxiliary circuitry (15, 45) is configured to short-circuit the control input (12) of the control switch (11), preferably to ground potential.

10. An external and/or auxiliary circuitry for an actively switched power factor correction, PFC, stage and/or an LED driver, as the external and/or auxiliary circuitry (15, 45) of the actively switched PFC stage (10, 40) according to any of the claims 1 to 9.

11. An LED driver (20, 50) comprising an actively switched PFC stage (10, 40) according to any of the claims 1 to 9.

12. A luminaire (30, 60) comprising:
an LED driver (20, 50) according to claim 11, and
an LED-based load (31, 61) supplied by said LED driver (20, 50) .

13. A method for operating an actively switched power factor correction, PFC, stage with a control switch and a control unit configured to issue a switch-on time for the control switch, comprising the steps of:
sensing (101) the switch-on time issued by the control unit,
sensing (102) a rectified supply voltage of the actively switched PFC stage, and
changing and/or manipulating and/or shortening (103) the switch-on time depending on the rectified supply voltage.

14. The method according to claim 13,
wherein the switch-on time is changed and/or manipulated and/or shortened during more than 50 per cent of the time duration of a corresponding half cycle of the rectified supply voltage.

15. The method according to claim 13 or 14,
wherein the method comprises the step of reducing the switch-on time in periods outside corresponding zero crossings of the rectified supply voltage of the actively switched PFC stage.
